# EUROPEAN PATENT APPLICATION

(11) **EP 4 707 914 A1**
(43) Date of publication of application: **11.03.2026**
(21) Application number: 24862395.1
(22) Date of filing: 30.05.2024
(51) Int. Cl.: G02F 1/35

(54) **PULSED LIGHT GENERATION DEVICE AND PULSED LIGHT GENERATION METHOD**

(30) Priority: 07.09.2023 JP 2023145156
(71) Applicant: Hamamatsu Photonics K.K., Hamamatsu-shi, Shizuoka 435-8558 (JP)
(72) Inventor: TOUME Kento, Hamamatsu-shi, Shizuoka 435-8558 (JP); SEUE Hideaki, Hamamatsu-shi, Shizuoka 435-8558 (JP)
(74) Representative: Grünecker Patent- und Rechtsanwälte PartG mbB
(86) International application number: PCT/JP2024/019941
(87) International publication number: WO 2025/052738

(57) **Abstract**

A pulsed light generation device comprises: an oscillation unit configured to oscillate pulsed light; an amplification unit configured to broaden a spectrum of the pulsed light oscillated from the oscillation unit; and a modulation unit configured to modulate a wavelength of the pulsed light whose spectrum has been broadened by the amplification unit, using a soliton self-frequency shift.

## Description

### Technical Field

The present disclosure relates to a pulsed light generation device and a pulsed light generation method.

### Background Art

A pulsed light generation device including an oscillation unit configured to oscillate pulsed light and a modulation unit configured to modulate a wavelength of the pulsed light oscillated by the oscillation unit using a soliton self-frequency shift is known. In this pulsed light generation device, by increasing an intensity of the pulsed light before modulation by the modulation unit, the modulation can cause the pulsed light to split into a plurality of pulsed light beams having different wavelengths (or output multicolored solitons) (for example, see Patent Literature 1).

### Citation List

### Patent Literature

[Patent Literature 1] Japanese Unexamined Patent Publication No. 2004-527001

### Summary of Invention

### Technical Problem

Although the pulsed light is split by modulation and a plurality of pulsed light beams are formed (hereinafter also referred to as "multi-solitonization") if an intensity of the pulsed light before modulation by a modulation unit is increased as described above in the above-described pulsed light generation device, it is extremely difficult to set all of the plurality of pulsed light beams to desired wavelengths. Moreover, because applications in which all of the plurality of pulsed light beams can be simultaneously used as a desired wavelength range are very rare, such multi-solitonization is often undesirable due to the necessity to eliminate unnecessary pulsed light or the like from a practical standpoint. Thus, when wavelength conversion is performed, it is desirable to suppress multi-solitonization.

Therefore, an objective of the present disclosure is to provide a pulsed light generation device and a pulsed light generation method capable of suppressing the formation of a plurality of pulsed light beams resulting from modulation using a soliton self-frequency shift.

### Solution to Problem

The pulsed light generation device of the present disclosure is [1] "a pulsed light generation device comprising: an oscillation unit configured to oscillate pulsed light; an amplification unit configured to broaden a spectrum of the pulsed light oscillated from the oscillation unit; and a modulation unit configured to modulate a wavelength of the pulsed light whose spectrum has been broadened by the amplification unit, using a soliton self-frequency shift."

As a result of intensive studies, the inventors have found that multi-solitonization can be suppressed by broadening the spectrum of the pulsed light before modulation using the soliton self-frequency shift. Accordingly, in the pulsed light generation device of the present disclosure, the spectrum of the pulsed light is broadened, and the wavelength of the broadened pulsed light is modulated using the soliton self-frequency shift. Thereby, for example, even if the intensity of the pulsed light before modulation is increased, the multi-solitonization can be suppressed.

A pulsed light generation device of the present disclosure is [2] "the pulsed light generation device according to [1], wherein the amplification unit broadens the spectrum of the pulsed light by similariton amplification." In this case, the amplification unit can suppress the stretching of the pulse. Thereby, it is possible to effectively implement modulation using the soliton self-frequency shift.

A pulsed light generation device of the present disclosure is [3] "the pulsed light generation device according to [1] or [2], wherein the amplification unit includes a normal dispersion fiber." In this case, it is possible to effectively implement the broadening of the spectrum of the pulsed light by the amplification unit.

A pulsed light generation device of the present disclosure is [4] "the pulsed light generation device according to any one of [1] to [3], wherein the amplification unit includes a double-clad fiber. In this case, for example, a double-clad fiber co-doped with erbium and ytterbium can be used as the amplification unit, thereby enabling the pulsed light before modulation to be effectively output at high power.

A pulsed light generation device of the present disclosure is [5] "the pulsed light generation device according to any one of [1] to [4], wherein the amplification unit broadens a spectral width of the pulsed light to 100 nm or more." In this case, multi-solitonization can be reliably suppressed.

A pulsed light generation device of the present disclosure is [6] "the pulsed light generation device according to any one of [1] to [5], further comprising a light intensity control unit arranged between the amplification unit and the modulation unit on an optical path of the pulsed light and configured to control an intensity of the pulsed light for each pulse." In this case, the light intensity control unit allows the wavelength of the generated pulsed light to be varied with each pulse.

A pulsed light generation device of the present disclosure is [7] "the pulsed light generation device according to [1] to [6], further comprising a pulse compression unit arranged between the amplification unit and the modulation unit on the optical path of the pulsed light and configured to compress a time width of a pulse of the pulsed light." In this case, it is possible to effectively implement modulation using the soliton self-frequency shift.

A pulsed light generation method of the present disclosure is [8] a pulsed light generation method comprising: an oscillation step of oscillating pulsed light; an amplification step of broadening a spectrum of the pulsed light oscillated in the oscillation step; and a modulation step of modulating a wavelength of the pulsed light whose spectrum has been broadened in the amplification step, using a soliton self-frequency shift."

Also, in the pulsed light generation method of the present disclosure, because the wavelength of the broadened pulsed light is modulated using the soliton self-frequency shift, multi-solitonization can be suppressed even if the output of the pulsed light before modulation is increased.

### Advantageous Effects of Invention

According to the present disclosure, it is possible to provide a pulsed light generation device and a pulsed light generation method capable of suppressing the formation of a plurality of pulsed light beams resulting from modulation using a soliton self-frequency shift.

### Brief Description of Drawings

FIG. 1 is a block diagram showing a pulsed light generation device according to an embodiment.
FIG. 2(a) is a graph showing a time waveform of ultrashort pulsed light output from an oscillator of FIG. 1. FIG. 2(b) is a graph showing a spectrum of the ultrashort pulsed light output from the oscillator of FIG. 1. FIG. 2(c) is a graph showing a time waveform of ultrashort pulsed light output from a fiber amplifier of FIG. 1. FIG. 2(d) is a graph showing a spectrum of the ultrashort pulsed light output from the fiber amplifier of FIG. 1.
FIG. 3 is a graph showing a specific example of a spectrum of the ultrashort pulsed light output from the fiber amplifier of FIG. 1.
FIG. 4(a) is a graph showing a time waveform of ultrashort pulsed light output from an acousto-optic modulator of FIG. 1. FIG. 4(b) is a graph showing a spectrum of the ultrashort pulsed light output from the acousto-optic modulator of FIG. 1.
FIG. 5(a) is a graph showing a time waveform of ultrashort pulsed light output from a soliton shift fiber of FIG. 1. FIG. 5(b) is a graph showing a spectrum of the ultrashort pulsed light output from the soliton shift fiber of FIG. 1. FIG. 5(c) is a graph showing a time waveform of ultrashort pulsed light output from a filter of FIG. 1. FIG. 5(d) is a graph showing a spectrum of the ultrashort pulsed light output from the filter of FIG. 1.
FIG. 6 is a flowchart showing a pulsed light generation method according to the embodiment.
FIG. 7(a) is a graph showing a relationship of an intensity of ultrashort pulsed light input to the soliton shift fiber, a wavelength of the soliton, and the number of solitons. FIG. 7(b) is a graph showing a relationship of a spectral width of the ultrashort pulsed light input to the soliton shift fiber, the wavelength of the soliton, and the number of solitons.

### Description of Embodiments

Hereinafter, embodiments will be described in detail with reference to the drawings. In the drawings, the same or corresponding parts are denoted by the same reference signs and redundant descriptions thereof will be omitted.

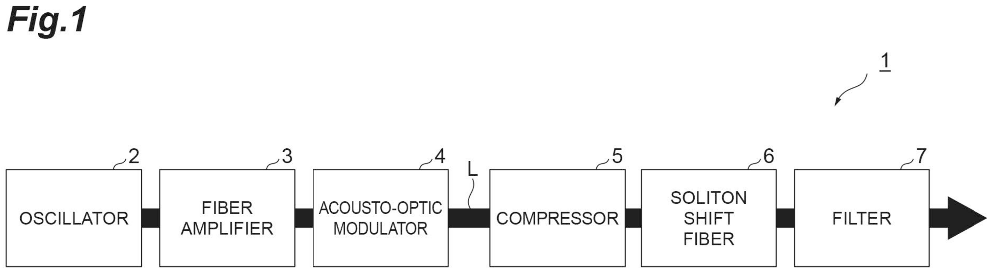

As shown in FIG. 1, a pulsed light generation device 1 of the present embodiment generates long-wavelength ultrashort pulsed light (pulsed light) L using a soliton self-frequency shift (Raman soliton shift). The pulsed light generation device 1 includes an oscillator 2, a fiber amplifier 3, an acousto-optic modulator 4, a compressor 5, a soliton shift fiber 6, and a filter 7.

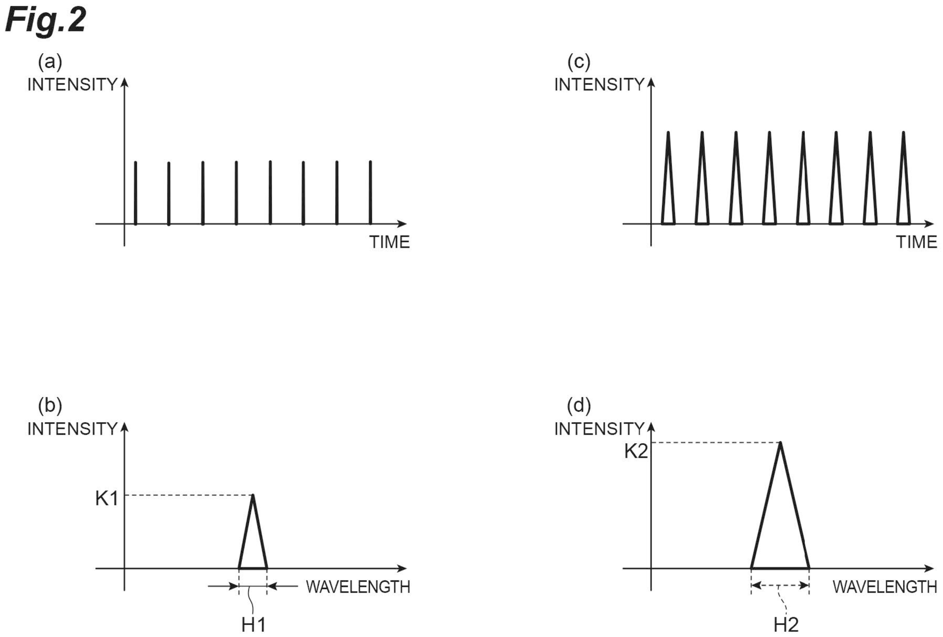

The oscillator 2 constitutes an oscillation unit that oscillates ultrashort pulsed light L. As shown in FIG. 2(a), the oscillator 2 generates an ultrashort pulse train having a predetermined period F1. Here, the oscillator 2 oscillates the ultrashort pulsed light L having a spectrum of a first intensity K1 with a first spectral width H1 as shown in FIG. 2(b). The oscillator 2 is not particularly limited and various oscillators can be used.

The fiber amplifier 3 constitutes an amplification unit that broadens the spectrum of the ultrashort pulsed light L oscillated by the oscillator 2. The fiber amplifier 3 broadens the spectrum of the ultrashort pulsed light L according to similariton amplification and increases its output power. The fiber amplifier 3 is arranged between the oscillator 2 and the soliton shift fiber 6 on an optical path of the ultrashort pulsed light L.

The fiber amplifier 3 includes a fiber amp. The fiber amp of the fiber amplifier 3 is a normal dispersion fiber and is a double-clad fiber co-doped with erbium and ytterbium. That is, the fiber amplifier 3 performs amplification while inducing nonlinear effects with a normal dispersion double-clad fiber to prevent stretching, thereby acquiring ultrashort pulsed light L as broadband amplified light. The normal dispersion fiber is a fiber of a state in which a dispersion parameter D (ps/nm/km) is negative. The dopant used in the fiber amplifier 3 is not particularly limited, and various dopants may be employed.

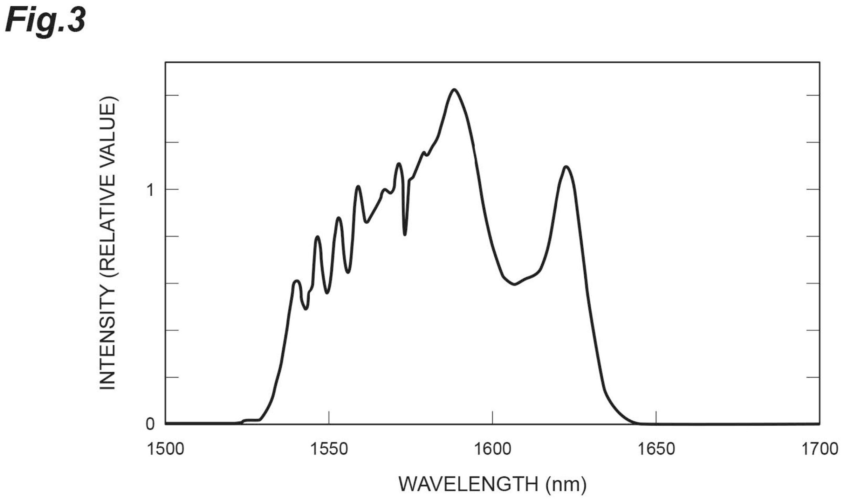

As shown in FIGS. 2(c) and 2(d), the fiber amplifier 3 broadens the spectral width of the ultrashort pulsed light L to a wider second spectral width H2 broader than a first spectral width H1. The fiber amplifier 3 increases the intensity of the ultrashort pulsed light L to a second intensity K2 higher than a first intensity K1 as high output power. Specifically, as shown in FIG. 3, the fiber amplifier 3 sets the spectral width of the ultrashort pulsed light L to 100 nm or more. In FIG. 3, the horizontal axis represents the wavelength of the ultrashort pulsed light L and the vertical axis represents a relative value based on a predetermined intensity with respect to the intensity of the ultrashort pulsed light L.

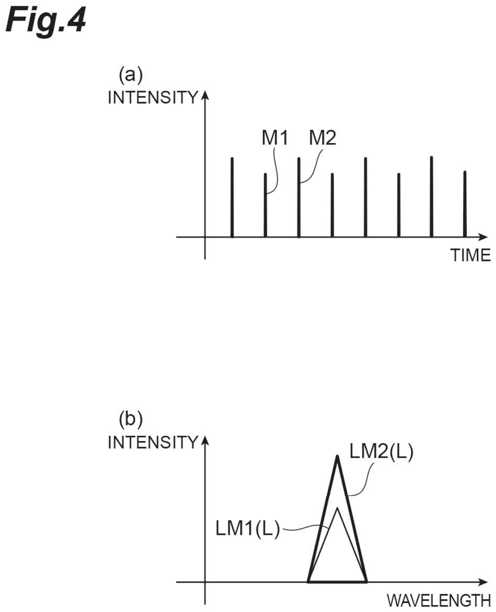

The acousto-optic modulator 4 constitutes a light intensity control unit that controls the intensity of the ultrashort pulsed light L for each pulse. The acousto-optic modulator 4, which uses the acoustic (acoustic waves) power to modulate the ultrashort pulsed light L, is referred to as an acousto-optic modulator (AOM). In the present embodiment, the acousto-optic modulator 4 is arranged between the fiber amplifier 3 and the soliton shift fiber 6 on the optical path of the ultrashort pulsed light L. In addition, the acousto-optic modulator 4 may be arranged anywhere between the oscillator 2 and the soliton shift fiber 6. As shown in FIGS. 4(a) and 4(b), the acousto-optic modulator 4 controls the intensity of the ultrashort pulsed light L so that the intensity varies with each pulse. For example, as shown in FIG. 4(a), when intensity modulations M1 and M2 are applied, ultrashort pulsed light beams LM1 and LM2 according to the intensities given in M1 and M2 are generated, as shown in FIG. 4(b). The modulation range and accuracy of the intensity of the ultrashort pulsed light L (LM1, LM2) depend on the performance of the acousto-optic modulator 4. The intensity of pulsed light in the pulse train of the ultrashort pulsed light L can be arbitrarily modulated by the acousto-optic modulator 4. In addition, the light intensity control unit is not limited to the acousto-optic modulator 4 and, for example, an electro-optic modulator (EOM) may be employed.

The compressor 5 constitutes a pulse compression unit that compresses the time width of the pulse of the ultrashort pulsed light L. In the present embodiment, the compressor 5 is arranged between the acousto-optic modulator 4 and the soliton shift fiber 6 on the optical path of the ultrashort pulsed light L. In addition, the compressor 5 may be arranged at any position between the fiber amplifier 3 and the soliton shift fiber 6. The compressor 5 compresses the time width of the ultrashort pulsed light L, for example, even if the ultrashort pulsed light L is stretched (for example, stretched for several picoseconds) by the fiber amplifier 3, and outputs the ultrashort pulsed light L with a time width compressed to be less than or equal to a certain value (less than 1 picosecond). The type of compressor 5 is not particularly limited, and various types of compressors can be used.

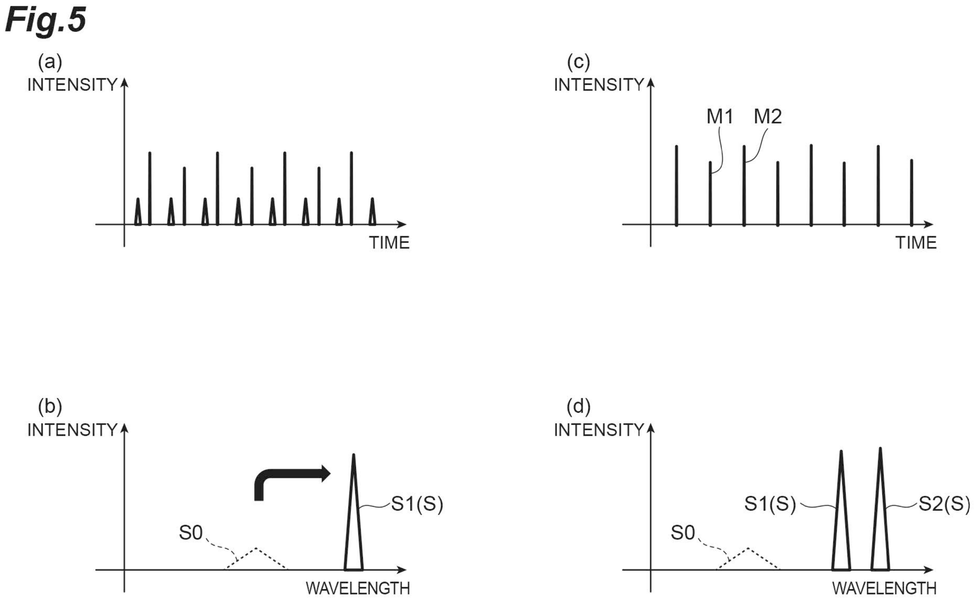

The soliton shift fiber 6 constitutes a modulation unit that modulates the wavelength of the ultrashort pulsed light L whose spectrum has been broadened by the fiber amplifier 3 and output power has been increased, using a soliton self-frequency shift. The soliton shift fiber 6 is arranged on the downstream side of the fiber amplifier 3 on the optical path of the ultrashort pulsed light L. As shown in FIGS. 5(a) and 5(b), the soliton shift fiber 6 shifts the wavelength of the ultrashort pulsed light L toward a longer wavelength and generates a soliton S1. As the soliton shift fiber 6, for example, a single-mode anomalous-dispersion fiber exhibiting anomalous dispersion in the wavelength band of the ultrashort pulsed light L generated by the fiber amplifier 3 may be used. In addition, by controlling the acousto-optic modulator 4, it is also possible to generate solitons having wavelengths different from that of the soliton S1. For example, as shown in FIG. 5(c), when intensity modulations such as M1 and M2 are applied, the wavelength of the soliton S is shifted to wavelengths according to the intensities applied at M1 and M2, as shown in FIG. 5(d) (solitons S1 and S2). The shift wavelength range and accuracy of the soliton S depend on the performance of the acousto-optic modulator 4. A shift wavelength of each soliton S in the soliton train generated from the pulse train of the ultrashort pulsed light L can be arbitrarily varied by applying intensity modulation to the pulse train in the acousto-optic modulator 4. In addition, in the illustrated example, the ultrashort pulsed light L modulated by the soliton self-frequency shift includes a non-soliton component S0 (a component that does not form the soliton S1 or S2).

The filter 7 filters the ultrashort pulsed light L whose wavelength has been modulated by the soliton shift fiber 6. The filter 7 is arranged on the downstream side of the soliton shift fiber 6 on the optical path of the ultrashort pulsed light L. In the illustrated example, as shown in FIGS. 5(b) and 5(d), the filter 7 cuts off the non-soliton component S0 of the ultrashort pulsed light L. An OD value of the filter 7 is preferably 3 or more. The filter 7 is not particularly limited, and various types of filters may be used.

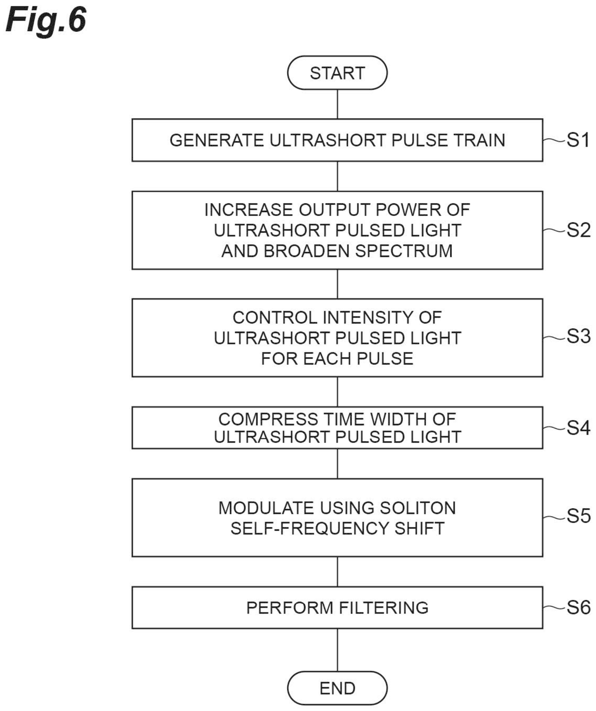

Next, a pulsed light generation method performed using the pulsed light generation device 1 will be described with reference to the flowchart of FIG. 6.

First, the oscillator 2 oscillates the ultrashort pulsed light L to generate an ultrashort pulse train having a predetermined period (oscillation step: step S1). The fiber amplifier 3 increases the output power of the ultrashort pulsed light L and broadens the spectrum of the ultrashort pulsed light L (amplification step: step S2). The acousto-optic modulator 4 controls the intensity of the ultrashort pulsed light L for each pulse in accordance with the specifications, conditions, or the like required for the pulsed light generation device 1 (step S3).

Subsequently, the compressor 5 compresses a time width of the ultrashort pulsed light L (step S4). The soliton shift fiber 6 modulates a wavelength of the ultrashort pulsed light L whose spectrum has been broadened using the soliton self-frequency shift to lengthen the wavelength (modulation step: step S5). The filter 7 filters the ultrashort pulsed light L whose wavelength has been shifted to a longer wavelength, and cuts off the non-soliton component S0 (step S6).

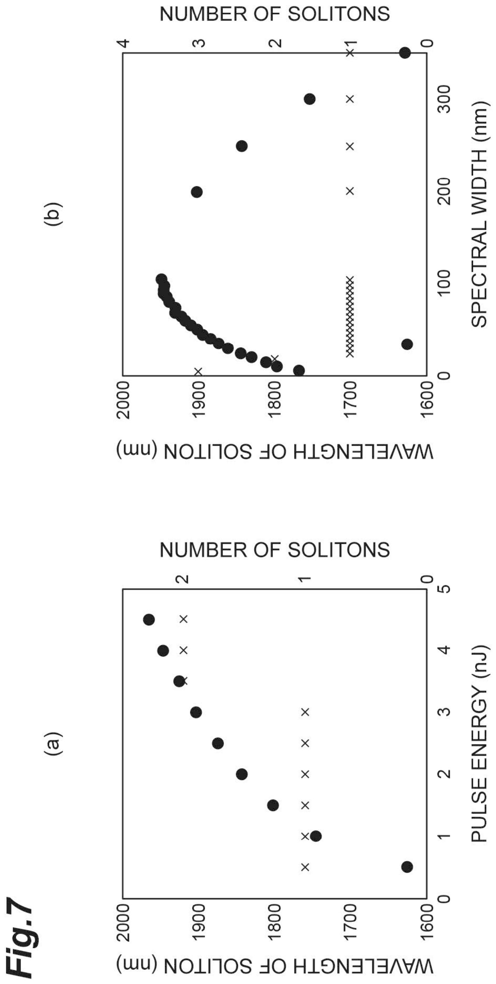

Here, as a result of intensive study, the inventors have found that, as shown in FIG. 7(a), when the pulse energy of the ultrashort pulsed light L input to the soliton shift fiber 6 was increased, the wavelength of the soliton generated by the soliton self-frequency shift was lengthened. In this case, it has been found that a variable wavelength range of the ultrashort pulsed light L generated by the pulsed light generation device 1 was broadened. On the other hand, it has been found that, when the pulse energy of the ultrashort pulsed light L input to the soliton shift fiber 6 was excessively high, a phenomenon called multi-solitonization occurred, and a plurality of solitons were generated. For example, from a practical viewpoint, it is preferable to suppress multi-solitonization.

Therefore, through further intensive study, the inventors have found that, as shown in FIG. 7(b), by broadening the spectral width of the ultrashort pulsed light L input to the soliton shift fiber 6, i.e., by broadening the spectrum of the ultrashort pulsed light L before modulation using the soliton self-frequency shift, multi-solitonization could be suppressed.

Accordingly, in the pulsed light generation device 1 and the pulsed light generation method, the spectrum of the ultrashort pulsed light L is broadened by the fiber amplifier 3, and the wavelength of the ultrashort pulsed light L whose spectrum has been broadened is modulated using a soliton self-frequency shift. Thereby, it is possible to efficiently lengthen the wavelength of the soliton by increasing the intensity of the ultrashort pulsed light L input to the soliton shift fiber 6 and suppress multi-solitonization while broadening the variable wavelength range.

In the pulsed light generation device 1 and the pulsed light generation method, the fiber amplifier 3 broadens the spectrum of the ultrashort pulsed light L according to similariton amplification. In this case, pulse stretching can be suppressed in the fiber amplifier 3, whereby modulation using the soliton self-frequency shift can be effectively implemented.

In the pulsed light generation device 1 and the pulsed light generation method, the fiber amplifier 3 includes a normal dispersion fiber. In this case, the spectrum of the ultrashort pulsed light L by the fiber amplifier 3 can be specifically broadened.

In the pulsed light generation device 1 and the pulsed light generation method, the fiber amplifier 3 includes a double-clad fiber. In this case, for example, a double-clad fiber co-doped with erbium and ytterbium can be used as the fiber amplifier 3, thereby effectively increasing the output power of the ultrashort pulsed light L before modulation.

In the pulsed light generation device 1 and the pulsed light generation method, the fiber amplifier 3 broadens the spectral width of the ultrashort pulsed light L to 100 nm or more. In this case, multi-solitonization can be reliably suppressed.

In the pulsed light generation device 1 and the pulsed light generation method, when the acousto-optic modulator 4 rapidly modulates the intensity of the ultrashort pulsed light L input to the soliton shift fiber 6 for each pulse, the wavelength of the generated ultrashort pulsed light L can be rapidly varied with each pulse. Although there is concern that the intensity of the ultrashort pulsed light L may greatly decrease due to the use of the acousto-optic modulator 4, such concern can be mitigated because the output power is increased by the fiber amplifier 3.

By means of the acousto-optic modulator 4, it is possible to modulate the intensity of the ultrashort pulsed light L input to the soliton shift fiber 6 to an intensity that does not cause a soliton self-frequency shift. In this case, it is possible to selectively thin out a pulse train having a desired repetition frequency in combination with the filter 7 and modulate the repetition frequency. In this case, it is possible to simultaneously modulate the repetition frequency while rapidly modulating the wavelength of the ultrashort pulsed light L for each pulse.

In the pulsed light generation device 1 and the pulsed light generation method, the compressor 5 compresses the time width of the pulse of the ultrashort pulsed light L input to the soliton shift fiber 6. In this case, modulation using the soliton self-frequency shift can be effectively implemented.

Because the pulsed light generation device 1 and the pulsed light generation method use a fiber laser, a maintenance-free configuration can be implemented compared with when a titanium-sapphire laser is used. In the pulsed light generation device 1 and the pulsed light generation method, ultrashort pulsed light L with the long wavelength can be freely generated by adjusting the intensity (output) of the ultrashort pulsed light L input to the soliton shift fiber 6. Moreover, because the wavelength conversion is achieved without using a structure having a physical movable part, the wavelength can be switched at high speed compared with when a titanium-sapphire laser is used.

Incidentally, in a technique in which the modulation unit modulates the wavelength of ultrashort pulsed light L using the soliton self-frequency shift, it is conceivable to increase the intensity of the ultrashort pulsed light L before modulation to split the ultrashort pulsed light L into a plurality of pulsed light beams of different wavelengths (multi-solitonization) and perform wavelength conversion. However, in this case, the aforementioned problems arising from multi-solitonization occur. Furthermore, because the modulation speed is, for example, about a few hundred kHz, which is much slower than the repetition frequency (about MHz) of general ultrashort pulsed light L, it is difficult to perform wavelength modulation at high speeds such as wavelength conversion for each pulse with respect to the ultrashort pulsed light L.

Moreover, in a technique in which the modulation unit modulates the wavelength of ultrashort pulsed light L using the soliton self-frequency shift, it is conceivable to generate a soliton having a longer center wavelength by increasing the fiber length in the modulation unit and extending the interaction length of the soliton self-frequency shift. However, in this case, even if the wavelength is lengthened, the center wavelength remains, for example, at about 2.03 µm, and the upper limit of the center wavelength is small when the wavelength is lengthened. In addition, even if the wavelength is lengthened, multi-solitonization occurs in the obtained light and the aforementioned problems are caused by the multi-solitonization.

In this respect, in the present embodiment, the ultrashort pulsed light L from the fiber amplifier 3, which broadens the spectrum, is modulated by the soliton shift fiber 6. That is, in a stage previous to the soliton shift fiber 6 that performs modulation using the soliton self-frequency shift, the ultrashort pulsed light L is broadened, and dispersion compensation is performed for the broadened ultrashort pulsed light L, thereby achieving both suppression of multi-solitonization and enhancement of the soliton self-frequency shift effect. Thereby, the generation of solitons having a center wavelength variable up to a long wavelength (for example, 2.2 µm) can be implemented. Furthermore, by suppressing multi-solitonization, the modulation of the intensity of the ultrashort pulsed light L and the center wavelength of the soliton can be made to correspond one-to-one. Consequently, by rapidly modulating the intensity of the ultrashort pulsed light L with a light intensity control unit (AOM, EOM, or the like) in a stage previous to the soliton shift fiber 6, wavelength conversion of the ultrashort pulsed light L for each pulse at the MHz to GHz order can be achieved and high-speed wavelength modulation is enabled.

An aspect of the present disclosure is not limited to the above-described embodiment.

Although a fiber amplifier including a double-clad fiber as a normal dispersion fiber is used in the above-described embodiment, as the fiber amplifier 3, a fiber amplifier of a single-clad fiber (for example, erbium-doped) as a normal dispersion fiber may be alternatively used. Also, in this case, at least the spectrum of the ultrashort pulsed light L can be broadened.

The materials and shapes of the respective constituent elements in the above-described embodiment and the above-described modified example are not limited to those described above, and various materials and shapes may be applied. Moreover, constituent elements in the above-described embodiment and the above-described modified example may be arbitrarily applied to the constituent elements in other embodiments or modified examples.

### Reference Signs List

1 Pulsed light generation device, 2 Oscillator (oscillation unit), 3 Fiber amplifier (amplification unit), 4 Acousto-optic modulator (light intensity control unit), 5 Compressor (pulse compression unit), 6 Soliton shift fiber (modulation unit), 7 Filter, L, LM1, LM2 Ultrashort pulsed light (pulsed light)

## Claims

1. A pulsed light generation device comprising:
an oscillation unit configured to oscillate pulsed light;
an amplification unit configured to broaden a spectrum of the pulsed light oscillated from the oscillation unit; and
a modulation unit configured to modulate a wavelength of the pulsed light whose spectrum has been broadened by the amplification unit, using a soliton self-frequency shift.

2. The pulsed light generation device according to claim 1, wherein the amplification unit broadens the spectrum of the pulsed light by similariton amplification.

3. The pulsed light generation device according to claim 1 or 2, wherein the amplification unit includes a normal dispersion fiber.

4. The pulsed light generation device according to claim 1 or 2, wherein the amplification unit includes a double-clad fiber.

5. The pulsed light generation device according to claim 1 or 2, wherein the amplification unit broadens a spectral width of the pulsed light to 100 nm or more.

6. The pulsed light generation device according to claim 1 or 2, further comprising a light intensity control unit arranged between the amplification unit and the modulation unit on an optical path of the pulsed light and configured to control an intensity of the pulsed light for each pulse.

7. The pulsed light generation device according to claim 1 or 2, further comprising a pulse compression unit arranged between the amplification unit and the modulation unit on the optical path of the pulsed light and configured to compress a time width of a pulse of the pulsed light.

8. A pulsed light generation method comprising:
an oscillation step of oscillating pulsed light;
an amplification step of broadening a spectrum of the pulsed light oscillated in the oscillation step; and
a modulation step of modulating a wavelength of the pulsed light whose spectrum has been broadened in the amplification step, using a soliton self-frequency shift.
